# EUROPEAN PATENT SPECIFICATION

(11) **EP 0 585 694 B1**
(45) Date of publication and mention of the grant of the patent: **10.12.1997**
(21) Application number: 93112994.4
(22) Date of filing: 13.08.1993
(51) Int. Cl.: C03B 33/023

(54) **Separating sheet glass**
Zerteilen von Glasscheiben
Séparation d'une feuille de verre

(30) Priority: 01.09.1992 US 938956; 05.08.1993 US 99751
(43) Date of publication of application: 09.03.1994
(73) Proprietor: Corning Incorporated, Corning New York 14831 (US)
(72) Inventor: Allaire, Roger Alphee, Corning, NY 14831 (US); Shinkai, Masayuki, Corning, NY 14831 (US); Pardue Jr. William Frederick, Corning NY 14831 (US)
(74) Representative: Boon, Graham Anthony

(56) References cited:
- EP-A- 0 457 751
- GB-A- 1 110 764
- GB-A- 2 257 699
- US-A- 3 520 457

## Description

This invention relates to a method of, and apparatus for, separating sheet glass along a score line.

It is customary to produce flat glass products in large sheets, or as a continuous sheet. Such large glass sheets are then trimmed and separated into smaller units of desired size for use.

In general, the separation procedure, while subject to many variations in detail, may be stated as (1) creating a controlled defect in a glass sheet (scoring) and (2) extending that defect to separate the glass (breaking). Scoring may be by any means that induces or creates a crack, or other controlled defect. The crack or defect may be extended to separate the glass by bending to stress the glass, by tapping on the surface opposite a score line, or by thermal separation.

Most applications, where large quantities of sheet glass are scored and broken, require only moderate dimensional and surface quality. Therefore, currently available separation processes usually result in non-square edges, and many small chips and scratches in the sheet surface.

The following patents disclose methods of separating sheet glass:

United States Patent No. 3,543,979 to Grove et al. describes a method of cutting glass with a laser beam of a wavelength to which the glass is opaque. If the glass is not immediately fractured, stress may be applied, for example, by passing the glass over a slightly elevated breaking roll.

United States Patent No. 3,790,362 to Dahlberg et al. describes controlling the temperature profile in a process for non-contact thermal severing of glass. FIGURE 7 in the patent shows applying a bending moment to a sheet of glass around a thermal score or heat path.

United Kingdom Patent No. 1,110,764 to Barradell-Smith describes a method of snapping a sheet of glass having a score line extending along the sheet. The method is characterized by applying, to opposite faces of the sheet, uniformly curved bending members of complementary form. The members extend across the sheet. Each comprises a plurality of contacting elements to impose on the sheet a curvature which is sufficient to snap the sheet along any score line parallel to the axis of the curvature, but is insufficient to break any unscored area of the sheet.

U.S. Patent No. 5,165,585 to Lisec discloses a method for breaking glass sheets in which the scored area of a sheet of glass is lifted, while a vacuum is applied underneath the glass sheet and on each side of the score line, either by vacuum-bore holes or suction devices which attach to the undersurface of the glass. With such devices, it can be difficult, at times, to consistently achieve an adequate and uniform vacuum.

U.S. Patent No. 2,005,487 to Zemanek discloses a glass breaker tool having an upwardly facing fulcrum element and two downwardly facing ribs. In use, the upwardly facing fulcrum element applies a pressure underneath the score line, while the downwardly facing ribs apply a pressure on each side of the score line, thereby bending the glass sheet and causing the glass to break along the score line.

U.S. Patent No. 3,592,370 to Boardman discloses a variety of glass breaking devices in which a roll on a conveyor system is used as a fulcrum to lift the undersurface of the scored area of the glass sheet, and two finger elements are utilized to exert a downward force on both sides of the score line, causing the glass to break along the score line.

U.S. Patent No. 2,924,044 to Basso, Jr. discloses an apparatus for severing glass to accommodate the thrust on one side of the sheet, and the glass will be severed in a clean straight line.

U.S. Patent No. 4,595,132 to Abel discloses a device for fracturing glass along a score line, which consists of according to the preamble of claim 1 below, a convexly curved fulcrum element and a pressure block having a concavely curved planar surface facing the fulcrum element. The pressure block is positioned so that the concavely curved planar surface pushes down on and contacts the glass on opposite sides of the score line, thereby breaking the glass sheet over the fulcrum.

With the advent of glass sheet application in liquid crystal displays, a strong need has developed for relatively large quantities of precision-cut glass panels. Such glass panels are required to have square edges and to be relatively chip free. Such precision panels are used in the fabrication of liquid crystal displays. For this product, any chip larger than five microns in height and 25 microns in length is currently unacceptable.

These requirements, which are expected to become even more stringent as technology progresses are made more difficult by the simultaneous demand for increasingly thinner sheets to cover the liquid crystal displays. None of the processes described above for breaking scored sheet glass, nor those currently in commercial use, satisfy the criteria for a high speed breaking process, capable of breaking thin glass sheets (such as, for example, less than about 1.2 mm) into high quality panels, that is, relatively chip free and having square edges. Instead, the prior art processes resulted in a relatively large quantity of uneven break surfaces and edge chips.

As believed that is at least partly due to the fact that prior art processes utilized relatively hard break pressure members to apply the forces necessary to snap the glass sheet along the score line. While many of the conventional production devices utilize rubber coatings on these surfaces, these rubber surfaces are relatively hard, and consequently do not provide a great deal of resiliency to the overall breaking process. Consequently, any non-uniformity in the transfer rolls, fulcrum rolls, pressure members, etc., would necessarily transmit an uneven force to the score line of the glass sheet. This uneven force would commonly result in the production of panels having non-square edges and/or a large degree of chipping.

U.S. Patent No. 3,303,980 to Offenbacher discloses an edge snapping device utilizing rollers, in which a continuous glass ribbon is broken into sheets by bending the sheet in the score line area over a fulcrum roller. The glass is pinned lying between two rollers on one side of the fulcrum, while a striker roller applies a downward force on the other side of the fulcrum. The striker roller consists of a steel tube having an annular jacket or cover of rubber.

U.S. Patent No. 3,592,370 to Boardman, discussed above, discloses covering the ends of the downward pressing finger elements with a rubber edging.

Consequently, there remains a need for a glass breaking process which is capable of separating thin sheet glass into precision panels. It would be particularly desirable if the process were operable with glass sheets having a thickness of less than about 1.2 mm.

### SUMMARY OF THE INVENTION

According to one aspect of the present invention there is provided an apparatus for separating a glass sheet along a score line on the sheet comprising:
a table for supporting a glass sheet having a first and second major surface, said first major surface having a score line thereon;
a lifting member on said table for contacting said second surface and lifting a portion of said glass sheet off of said table; and
a first and second pressure member spaced above said table, said first pressure member on one side and said second pressure member on the other side of said lifting member, for exerting a preliminary stress on the score line of said lifted glass sheet;
   characterized by at least one third pressure member spaced above said table for exerting a critical stress on the score line of said glass sheet, said at least one third pressure member being spaced between said first and second pressure members.

According to another aspect of the present invention there is provided a method of separating a glass sheet along a score line on a surface of said glass sheet comprising:
lifting said sheet along said score line with an elongated fulcrum which applies a first force to the surface of said glass sheet opposite said score line, said fulcrum being aligned with said score line, to bend said sheet in the area of said score line;
applying a second and third force, using a first and a second elongated pressure member positioned on each side of said score line, to the surface of said glass sheet having said score line, to initiate a preliminary stress on the score line of said glass sheet; and
contacting the upper surface of said glass sheet with a third elongated pressure member in between said first and second elongated pressure members, said third member exerting a critical stress on the score line of said glass sheet. Said second and third members each preferably have a spring constant of less than or equal to about 20 pounds force per inch deflection of said members per inch length of said members (138 Nt/mm/m).

By applying a prestress to first uniformly stress the score line along its length, and then applying a critical stress to break the glass sheet along the score line, the incidence of chips and non-square edges encountered is greatly minimized, even for thin sheets of glass. By implementing the present invention into an automated, production type process, the speed at which glass panels having precision shaped edges can be acquired is greatly increased.

By using resiliently cushioned pressure members such as those provided with the spring constants noted above, to apply the forces necessary to break the glass panels, it is believed that the stress is applied to the score line in a much more uniform manner. This beneficially contributes to the precision of the breaking process.

By utilizing layers of cushioning material on the glass contacting surfaces of pressure members to achieve such cushioning pressure members, an added benefit is achieved in that the adverse affect caused by glass chips and other foreign materials caught between the glass surface and the pressure members is minimized.

In the accompanying drawings :
FIGURE 1 is a graphical representation of the stress conditions applied to a glass sheet in carrying out the invention.
FIGURE 2 is a top plan view of an apparatus in accordance with the invention.
FIGURE 3 is a front plan view of the apparatus of FIGURE 2.
FIGURE 4 is a side view of the apparatus of FIGURE 2.
FIGURE 5 is a top plan view of a scored glass sheet.
FIGURE 6 is a side view of an apparatus in accordance with the invention for separating an edge portion of a glass sheet.

The present invention is generally applicable to the separation of a glass sheet into smaller size units. It is particularly applicable to the production of precision panels of thin glass sheets (such as those less than or about 1.2 mm), where it is essential to obtain square edges which are free of surface damage and edge defects, such as chips, hackles and hooks. The invention is also applicable to the trimming of glass sheets prior to separation into panels. The invention was developed as part of an effort to automatically separate bi-axially scored glass sheets into individual panels for liquid crystal display (LCD) structures. The target was to produce panels having precision panel quality in a high speed automatic process. Accordingly, much of the ensuing description is oriented to such product.

A glass breaking study began by exploring how a crack extends through the glass for sheet separation. The breaking mechanisms of the glass were then studied to understand what parameters defined edge quality during a break. As a result of this investigation, the following preferred parameters were identified:
1. A continuous and uniform depth score line.
2. Stress loads applied uniformly along the full length of the score line.
3. Stress loads applied symmetrically on each side of the score line, so that the stress occurs uniformly across the score line.
4. Preferably, the break crack begins at one end of a score line and propagates toward the other end of the score line.
5. The break crack propagation preferably runs continuously and rapidly through the length of the score line.

It should be noted that these are only preferred parameters, however, and that some degree of deviation may be tolerated depending on the precision required in edge quality. It is believed that basic concept of the present invention achieves such high precision results because the score line is uniformly prestressed along its entire length. Putting this concept into practice involves these general steps: (1) establish a score line, also referred to as a vent crack; (2) prestress the glass uniformly along the entire score line, and (3) exert a critical stress amount which is sufficient to cause the glass to break along the score line.

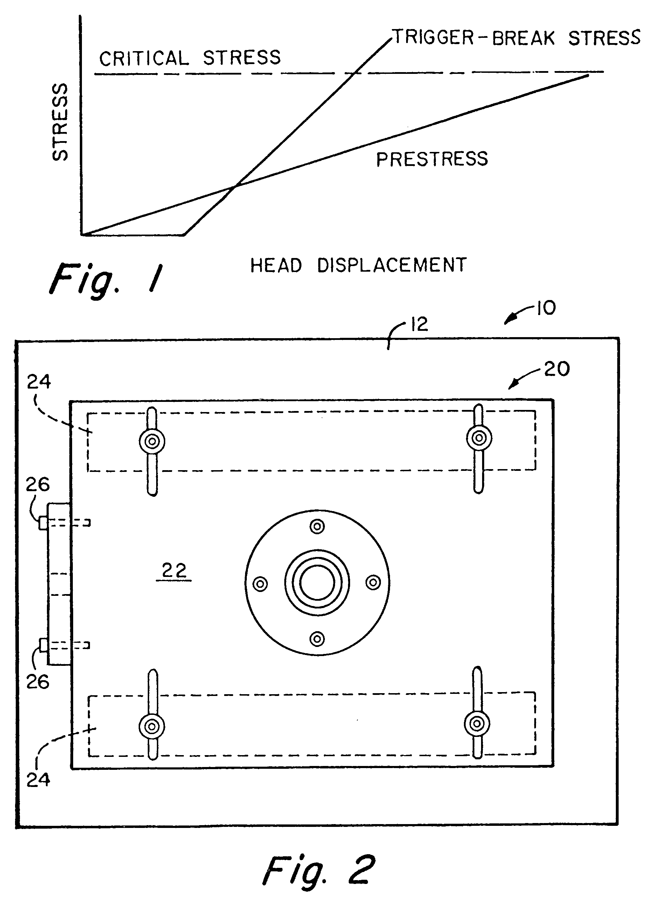

FIGURE 1 is a generalized graphical representation of the considerations that must be imposed on a glass sheet to carry out this concept. The stress level in the glass is plotted on the vertical axis. The displacement of the pressure head creating stresses on the glass is plotted on the horizontal axis. Absolute values are purposely omitted in the interest of generalizing the showing.

In FIGURE 1, a solid line, labeled "Prestress", shows the continuously increasing level of stress created along the full length of a score line as a pressure head is lowered against the glass. The prestress load is applied to the score line to create stress in the score line by flexure. The critical stress level is the level at which the glass freely separates along the score line. It is shown in FIGURE 1 by a non-uniformly dashed line labeled "Critical Stress".

Once the score line has been prestressed, a greater stress is applied, equal to or greater than the critical stress, to cause the glass to break along the score line. Preferably, this critical stress is applied at one end of the score line, so that the break or crack runs continuously from the initiation point at one end of the score line to the opposite end of the line. Since separation occurs in a prestressed environment, a chip-free, square edge is formed on each separated piece of glass.

It should be noted that FIGURE 1 is not represented in any real units, and consequently the amount of prestress illustrated could vary therefrom. The critical factor is that the score line be uniformly prestressed an amount less than the critical stress, after which time the critical stress is quickly applied.

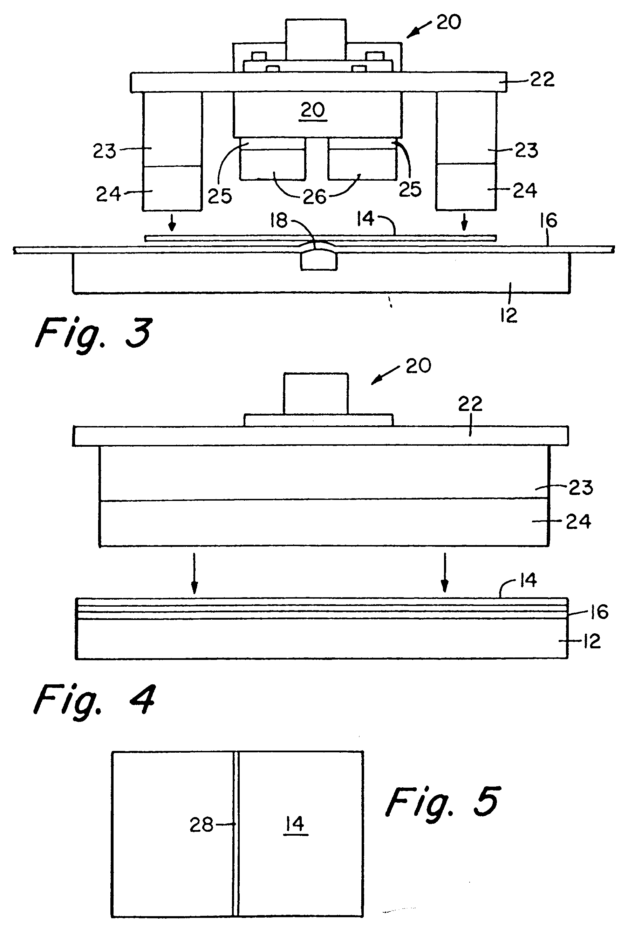

FIGURE 2 is a top plan view of an apparatus developed to practice an aspect of the invention wherein a glass sheet is separated into two smaller units. The apparatus is generally designated by the numeral 10. FIGURE 3 is a front plan view of apparatus 10.

Apparatus 10 embodies a base plate 12 which provides a flat surface against which a glass sheet 14 may be pressed. As shown, glass sheet 14 is conveyed over base plate 12 on a conveyor belt 16. When breaking extremely thin (less than 1.2 mm) glass sheets, the thin glass sheets are very susceptible to any surface irregularities on the glass surface. Thin surface irregularities, which may be caused by, for example, glass chips or other hard particles on the glass surface, having a deleterious effect on breakage quality. Consequently, a flexible belt 16 is preferred to a hard surface for breaking so surface irregularities, which would otherwise cause deviations from a square edge on the glass, are prevented from doing so.

Base plate 12 is provided with an elongated, raised, linear portion 18 in the nature of a hump. Raised portion 18 runs laterally the full width of conveyor belt 16 and glass sheet 14. As explained later, it functions as a fulcrum and defines an axis of flexure along which glass sheet 14 is flexed and stressed. Fulcrum 18 is positioned so that a score line on glass sheet 14 may be positioned directly above and in registry with it. A fulcrum height of about 0.75 mm is preferred for 1.1 mm thick glass. However, heights of 0.1 to 1.5 mm have been used successfully. In general, greater fulcrum heights can be used with thinner glass.

Mounted above base plate 12, arid adapted to vertical movement, is a pressure head for applying stress to the sheet. The pressure head is generally designated 20.

Pressure head 20 has a top plate 22 which carries two prestress members 23. Each prestress member 23 is preferably provided with a resiliently cushioning prestress pad 24. Optionally, one or more trigger break members 25 may be provided. Preferably, each trigger break member 25 is provided with a resiliently cushioning pad 26. Prestress pads 24 are preferably coextensive in length with the width of base plate 12 and/or glass sheet 14, and spaced apart equally on opposite sides of fulcrum 18. The optional trigger pads 26, if used, are positioned on either side of fulcrum 18, and spaced between pads 24. Trigger pads 26 also may be configured to be as long as the width of the base plate 12 and/or glass sheet 14. More preferably, however, trigger pads 26 are relatively short, and positioned adjacent to one edge of glass sheet 14, as illustrated in FIGURE 2.

In the present invention, it has been found that it is extremely advantageous to prestress the score line uniformly prior to breaking the glass along the score line. Unfortunately, glass sheets do not normally deflect a large amount prior to breaking. Consequently, in typical glass breakage systems, increasing stresses are rapidly transmitted to the score line until it breaks. It has been found that, by utilizing resiliently cushioned pressure members to provide the pressures needed to break the glass, this rapid increase in the transfer of force to the score line is alleviated to some extent, resulting in more control and greater flexibility in the system. Consequently, any inconsistencies in the relationship between the pressure members and the glass sheet (such as when one of the pressure members is slightly askew) are minimized, since the cushioning member will deflect further in areas where it contacts the glass sheet first. Such members therefore facilitate the establishment of a uniform stress along the entire score line prior to breakage.

Such resiliently cushioning members can be achieved using a variety of techniques. A layer of resiliently cushioning material may be provided on each of the members, or, alternatively, it is conceivable that mechanical springs could be utilized to support the members and achieve a similar effect. It is preferred that the pressure members be provided with a cushioning layer or device which achieves a spring constant, between the pressure members and the glass sheet, of less than or equal to about 20 pounds/inch deflection per inch length of the pressure member (138 Newtons of force/millimeter deflection/meter length).

Preferably, the cushioning effect is achieved by providing pressure members 23 and 25 with resiliently cushioning materials 24 and 26 which provide the cushioning effect. Suitable cushioning materials which provide such a cushioning effect include those having a hardness, in international rubber hardness degrees, between about 10 to about 25 hardness degrees. Preferred materials for forming the resiliently cushioning layers are foam materials, such as, for example, foam layers of neoprene rubber, polyethylene, vinyl, acrylic, or ethylene propylene terpolymer. In a preferred embodiment, ethylene proplylene terpolymer having a hardness of 15 degrees (International Rubber Hardness Degrees) is utilized as a layer of resiliently cushioning material on both of the pads 24.

As mentioned above, in conventional glass breakage apparatus, any surface irregularities such as glass chips, dirt or other hard particles have a deleterious effect on the breakage edge quality. This is due to the fact that these prior art devices utilized relatively hard surfaces to transmit the forces necessary to break the glass sheet along the score line. Consequently, any glass chips or other hard particles caught between these pressure members and the glass sheet would create an uneven force in the area of the glass chip, which would then be transmitted directly to the score line surface. By covering the glass contacting surfaces of the pressure members 23 with a layer of resiliently deformable material, there is an added benefit in that any edge chips caught between the glass surface and the layer merely deform the material, and do not adversely affect the overall performance of the member 23. The use of devices having such resiliently cushioning materials have resulted in much higher quality edge breaks than was previously thought possible.

If trigger members 25 are utilized, they also are preferably covered with a layer 26 of a resiliently deformable material. Preferably, however, this material is formed from a less cushioning material than pads 24, so that greater stress can be quickly generated therewith. By providing such a cushioning surface on pads 24 and 26, the accuracy and neatness of the breakage of the score line is greatly enhanced. As mentioned above, it is believed that this is due to the nature of the cushioning material to flex, relative to rigid materials, such as metal. Preferred cushioning materials are foam materials, which include both open and closed cell foam materials. Preferably, however, closed cell foam materials are utilized, to preclude entrapment of foreign particles within the foam material. Examples of suitable foam material include those which are made from neoprene foam rubber, polyethylene, vinyl, or acrylic materials. Taking fulcrum 18 and the glass score line as a reference centerline, pads 24 are preferably spaced an equal distance from the center line. A preferred spacing between the inside edges of pads 24 is about 140 mm. As a general rule, thinner prestress pads 24 can be used with thinner glass. We have used 50 mm thick pads with 1.1 mm glass.

When no trigger pads 26 are used, pads 24 apply the only pressure to the glass sheet and prior to the time the glass sheet breaks along the score line, it is preferable that prestress pads 24 deform a distance of at least 1 mm, more preferably at least 2 mm and most preferably at least 3 mm. This relatively large deformation insures that any glass chips, etc., will not have a deleterious effect on edge quality. To achieve such a large deformation, the cushioning surface should be composed of a material having a hardness of from about 10 to 25 degrees (International Rubber Hardness Degrees).

When trigger pads 26 are utilized, pads 24 preferably extend downwardly further than pads 26, thereby reaching the glass surface sooner. In a preferred embodiment, pads 24 are designed to reach the glass surface at least about 13 mm before pads 26. In addition to being shorter, pads 26 are also more closely spaced. In one preferred embodiment, they are about 15 mm to each side of the center line.

As shown in FIGURE 5, in operation, glass sheet 14 is scored along line 28. Glass sheet 14 is then positioned on conveyor belt 16 so that score line 28 is aligned with the axis of flexure provided by fulcrum 18. Preferably, the alignment is as near exact as is feasible. However, slight offsets, either laterally or rotationally, may be tolerated.

Score line 28 may be produced in any known manner. We have employed a Villa score machine, Model GS100. Score line depths ranging from 5 to 130 microns have been used successfully. The critical requirement is that the score line be deeper than any surface defect. Shallower depths are preferred to permit higher prestress levels which appear to give better quality break surfaces. A preferred score depth is about 80 microns.

With score line 28 aligned with fulcrum 18, pressure head 20 is lowered. Prestress pads 24 simultaneously contact the glass surface on opposite sides of score line 28, and apply a stress thereto. An increasing stress level is generated as pressure head 20 is lowered further and the compression of pads 24 causes glass sheet 14 to be bent about fulcrum 18. When no trigger pads 26 are utilized, all of the force necessary to break the glass sheet is transmitted by pads 24.

Alternatively, pads 24 can be utilized to apply only a prestress, and trigger pads 26 then can be utilized to apply the stress necessary to break the glass along the score line. In such applications where trigger pads 26 are utilized, before the prestress level caused by prestress pads 24 reaches the critical stress level, break pads 26 contact the glass. Contact is preferably made at the edge of glass sheet 14 and on opposite sides of score line 28. Break pads 26 generate a stress in excess of the critical level as illustrated in FIGURE 1, causing a break to be initiated that runs along score line 28.

Preferably, the break is initiated at one end of score line 28. If a break is initiated at a location along the score line other than an end, the origin of the crack is less predictable, and backside hooks seem to be more common. The cleanest breaks are achieved when both the prestress pads 24 and trigger pads 26 are lowered in one rapid stroke of stress applicator 20. This assures minimum growth of the score line before a break is triggered by break pads 26.

Alternatively, rather than using a pair of trigger pads 26, a single trigger pad 26 may be utilized to apply the critical stress to the score line. The concept of any embodiment using trigger pads 26 is merely that the critical stress level must be reached along the score line using one or more trigger pads 26, after the score line has first been prestressed at a lesser stress level using prestress pads 24.

The embodiment discussed immediately herein above has been practiced through a wide range of equipment variations and glass score conditions. These include:
1. fulcrum height of 0.1 to 1.5 mm with 0.75 mm preferred.
2. prestress pads spaced 20 mm to 110 mm from the score line with 70 mm preferred.
3. score line depth of 5 to 130 microns with about 80 microns preferred.
4. both a metal plate and a flexible belt as support for the glass sheet, the latter being preferred.

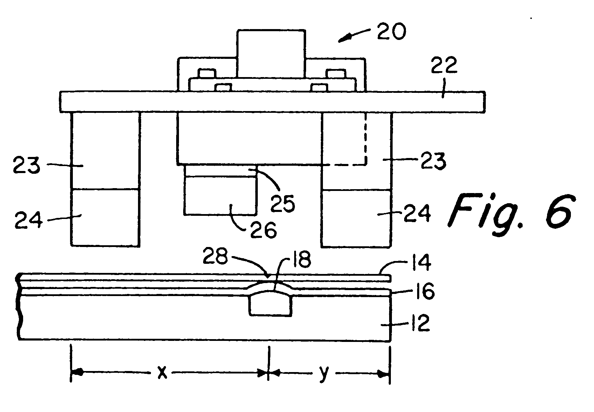

The invention has been described with reference to the severing of a glass sheet into smaller units. It should be appreciated that the invention may be applied to other severing operations as well, such as edge separating. A preferred embodiment of such an operation is now described utilizing a modification of the apparatus described above. The modified apparatus is shown in FIGURE 6, a side view similar to that of FIGURE 3. The essential difference is that pressure pads 24 are spaced asymmetrically with respect to fulcrum 18 (which could alternatively be the edge of a table) and score line 28. This is indicated by a dotted line composed of segments x and y which meet at a point in line with score line 28.

In an edge separating operation, a glass sheet is scored a relatively short distance from the edge of the sheet, along a line parallel with the edge. Pressure head 20 is set to generate stress on opposite sides of the score line to prestress the glass sheet. Prestress pads 24 contact the sheet on opposite sides off the score line 28, but are spaced asymmetrically therefrom. As illustrated in FIGURE 6, the pad 24 contacting the strip to be separated from the sheet may be set to contact closer to the score line than the pad 24 that contacts the main part of the sheet. This is indicated by the dotted line composed of segments x and y. For example, x might be 20 mm and y might be 70 mm.

Although a single break pad 26 is illustrated in Fig. 6, a pair of break pads 26 could also be utilized.

Although the invention has been described in detail for the purpose of illustration, it is understood that such detail is solely for that purpose and variations can be made therein by those skilled in the art without departing from the scope of the invention, as defined by the appended claims.

## Claims

1. An apparatus (10) for separating a glass sheet (14) along a score line (28) on the sheet comprising:
a table (12) for supporting a glass sheet having a first and second major surface, said first major surface having a score line thereon;
a lifting member (18) on said table for contacting said second surface and lifting a portion of said glass sheet off of said table; and
a first and second pressure member (23) spaced above said table, said first pressure member on one side and said second pressure member on the other side of said lifting member, for exerting a preliminary stress on the score line of said lifted glass sheet;
characterized by at least one third pressure member (25) spaced above said table for exerting a critical stress on the score line of said glass sheet, said at least one third pressure member being spaced between said first and second pressure members.

2. The apparatus (10) of claim 1, wherein said lifting member (18) is an elongated lifting member.

3. The apparatus (10) of claim 1, wherein at least one of said pressure members (23, 25) and said lifting member (18) comprises a resiliently cushioning surface thereon (24, 26).

4. The apparatus (10) of claim 1, comprising two said third pressure members (25), one of said third pressure members being on one side of said lifting member (18), and the other of said pressure members on the other side of said lifting member.

5. The apparatus (10) of claim 1, wherein said at least one third pressure member (25) is positioned to contact said glass sheet near one end of said score line (28).

6. The apparatus (10) of claim 1, wherein said lifting member (18) is stationary with respect to said table (12).

7. The apparatus (10) of claim 3, wherein said first and second pressure members (23) each have a cushioning surface (24) thereon.

8. The apparatus (10) of claim 1, wherein said first and second pressure members (23) and said at least one third pressure member (25) are movable with respect to said table (12).

9. The apparatus (10) of claim 3, wherein the thickness of, and the material for, said cushioning surface is chosen so that said material deflects at least 1 mm prior to said glass breaking.

10. A method of separating a glass sheet (14) along a score line (28) on a surface of said glass sheet comprising:
lifting said sheet along said score line with an elongated fulcrum (18) which applies a first force to the surface of said glass sheet opposite said score line, said fulcrum being aligned with said score line, to bend said sheet in the area of said score line;
applying a second and third force, using a first and a second elongated pressure member (23) positioned on each side of said score line, to the surface of said glass sheet having said score line, to initiate a preliminary stress on the score line of said glass sheet; and
contacting the upper surface of said glass sheet with a third elongated pressure member (25) in between said first and second elongated pressure members, said third member exerting a critical stress on the score line of said glass sheet.

11. The method of claim 10, wherein said fulcrum (18), and said first, second and third pressure members (23, 25) extend substantially the length of said score line (28).

12. A method according to claim 10 or 11, wherein said second and third members (23) each have a spring constant of less than or equal to 138 N/mm per mm deflection per m length of said member (20 lb/in deflection/in length).

13. The method of claim 12, wherein said spring constant is provided by a layer of resiliently cushioning material.

14. The method of claim 13, wherein said cushioning material comprises a foam material selected from the group consisting of neoprene rubber, polyethylene, vinyl, acrylic and ethylene propylene terpolymer.

15. The method of claim 13 or 14, wherein said cushioning material has a hardness in International Rubber Hardness degrees of between 10 and 25 degrees.

16. The method of any one of claims 10 to 15, wherein said critical stress is applied at one end of the score line.

17. The method of any one of claims 10 to 16, wherein said critical stress is applied by a pair of third pressure members (25) on opposite sides of the score line.

## Patentansprüche

1. Vorrichtung (10) zum Zerteilen einer Glasscheibe (14) entlang einer Kerblinie (28) auf der Scheibe, aufweisend:
einen Tisch (12) zum Tragen einer Glasscheibe mit einer ersten und einer zweiten Hauptfläche, wobei die erste Hauptfläche mit einer Kerblinie versehen ist,
ein Anhebeteil (18) auf dem Tisch zum Kontaktieren der zweiten Fläche und zum Anheben eines Abschnitts der Glasscheibe, weg von dem Tisch, und
ein erstes und ein zweites Druckteil (23), die unter Abstand über dem Tisch angeordnet sind, wobei das erste Druckteil auf der einen Seite und das zweite Druckteil auf der anderen Seite des Anhebeteils vorgesehen sind, um eine vorläufige Spannung auf die Kerblinie der angehobenen Glasscheibe auszuüben,
gekennzeichnet durch zumindest ein drittes Druckteil (25), das unter Abstand über dem Tisch angeordnet ist, um eine kritische Spannung auf die Kerblinie der Glasscheibe auszuüben, wobei das zumindest eine dritte Druckteil unter Abstand zwischen den ersten und zweiten Druckteilen liegt.

2. Vorrichtung (10) nach Anspruch 1, wobei das Anhebeteil (18) ein längliches Anhebeteil ist.

3. Vorrichtung (10) nach Anspruch 1, wobei zumindest eines der Druckteile (23, 25) und das Anhebeteil (18) eine nachgiebige puffernde Oberfläche (24, 26) aufweisen.

4. Vorrichtung (10) nach Anspruch 1, aufweisend zwei dritte Druckteile (25), wobei eines der dritten Druckteile sich auf einer Seite des Anhebeteils (18) befindet, und wobei das andere der Druckteile sich auf der anderen Seite des Anhebeteils befindet.

5. Vorrichtung (10) nach Anspruch 1, wobei das zumindest eine dritte Druckteil (25) so positioniert ist, daß es die Glasscheibe in der Nähe von einem Ende der Kerblinie (28) kontaktiert.

6. Vorrichtung (10) nach Anspruch 1, wobei das Anhebeteil (18) in Bezug auf den Tisch (12) stationär ist.

7. Vorrichtung (10) nach Anspruch 3, wobei die ersten und zweiten Druckteile (23) jeweils eine puffernde Oberfläche (24) aufweisen.

8. Vorrichtung (10) nach Anspruch 1, wobei die ersten und zweiten Druckteile (23) und das wenigstens eine dritte Druckteil (25) in bezug auf den Tisch (12) beweglich sind.

9. Vorrichtung (10) nach Anspruch 3, wobei die Dicke des und das Material für die puffernde Oberfläche so gewählt sind, daß das Material sich vor dem Brechen des Glases um zumindest 1 mm verbiegt.

10. Verfahren zum Zerteilen einer Glasscheibe (14) entlang einer Kerblinie (28) auf einer Oberfläche der Glasscheibe, aufweisend:
Anheben der Scheibe entlang der Kerblinie mit einem länglichen Hebel (18), der eine erste Kraft auf die Oberfläche der Glasscheibe in Gegenüberlage zu der Kerblinie ausübt, wobei der Hebel mit der Kerblinie ausgerichtet ist, um das Blatt im Bereich der Kerblinie zu biegen,
Anlegen einer zweiten und dritten Kraft unter Verwendung eines ersten und eines zweiten länglichen Druckteils (23), die zu beiden Seiten der Kerblinie positioniert sind, auf die Oberfläche der Glasscheibe mit der Kerblinie, um eine vorläufige Spannung auf die Kerblinie der Glasscheibe einzuleiten, und
Kontaktieren der Oberseite der Glasscheibe mit einem dritten länglichen Druckteil (25), das zwischen den ersten und zweiten länglichen Druckteilen angeordnet ist, wobei das dritte Teil eine kritische Spannung auf die Kerblinie der Glasscheibe ausübt.

11. Verfahren nach Anspruch 10, wobei der Hebel (18) und die ersten, zweiten und dritten Druckteile (23, 25) sich im wesentlichen über die Länge der Kerblinie (28) erstrecken.

12. Verfahren nach Anspruch 10 oder 11, wobei die zweiten und dritten Teile (23) jeweils eine Federkonstante kleiner oder gleich 138 N/mm pro mm Auslenkung pro m Länge des Teils aufweist (20 lb/Inch Auslenkung/Inch Länge).

13. Verfahren nach Anspruch 12, wobei die Federkonstante durch eine Schicht von nachgiebigem pufferndem Material bereitgestellt ist.

14. Verfahren nach Anspruch 13, wobei das puffernde Material ein Schaumstoffmaterial aufweist, das ausgewählt ist aus der Gruppe, die besteht aus Neoprengummi, Polyethylen-, Vinyl-, Acryl- und Ethylenpropylen-Terpolymer.

15. Verfahren nach Anspruch 13 oder 14, wobei das Puffermaterial eine Härte von zwischen 10 und 25 Grad in internationelen Gummihärtegraden aufweist.

16. Verfahren nach einem der Ansprüche 10 bis 15, wobei die kritische Spannung an ein Ende der Kerblinie angelegt wird.

17. Verfahren nach einem der Ansprüche 10 bis 16, wobei die kritische Spannung durch ein Paar von dritten Druckteilen (25) zu beiden Seiten der Kerblinie angelegt wird.

## Revendications

1. Un appareil (10) pour séparer une feuille de verre (14) le long d'une ligne de rayure (28) sur la feuille, comprenant :
une table (12) propre à supporter une feuille de verre présentant une première et une seconde faces principales, ladite première face principale portant une ligne de rayure ;
un élément souleveur (18) sur ladite table pour venir en contact avec ladite seconde face et soulever une portion de ladite feuille de verre de ladite table ; et
un premier et un deuxième éléments presseurs (23) espacés au-dessus de ladite table, ledit premier élément presseur étant situé d'un côté et ledit deuxième élément presseur étant situé de l'autre côté dudit élément souleveur, à l'effet d'exercer un effort préliminaire sur la ligne de rayure de ladite feuille de verre soulevée ;
caractérisé par au moins un troisième élément presseur (25) placé à distance au-dessus de ladite table pour exercer un effort critique sur la ligne de rayure de ladite feuille de verre, le ou lesdits troisièmes éléments presseurs étant espacés entre lesdits premier et deuxième éléments presseurs.

2. L'appareil (10) de la revendication 1, dans lequel ledit élément souleveur (18) est un élément souleveur de forme allongée.

3. L'appareil (10) de la revendication 1, dans lequel l'un au moins desdits éléments presseurs (23, 25) et ledit élément souleveur (18) comprennent une surface d'amortissement élastique sur ceux-ci (24, 26).

4. L'appareil (10) de la revendication 1, comprenant deux susdits troisièmes éléments presseurs (25), l'un desdits troisièmes éléments presseurs étant situé d'un côté dudit élément souleveur (18) et l'autre étant situé de l'autre côté dudit élément souleveur.

5. L'appareil (10) de la revendication 1, dans lequel le ou lesdits troisièmes éléments presseurs (25) sont disposés de manière à venir en contact avec ladite feuille de verre près de l'une des extrémités de ladite ligne de rayure (28).

6. L'appareil (10) de la revendication 1, dans lequel ledit élément souleveur (18) est fixe par rapport à ladite table (12).

7. L'appareil (10) de la revendication 3, dans lequel lesdits premier et deuxième éléments presseurs (23) portent chacun une surface d'amortissement (24).

8. L'appareil (10) de la revendication 1, dans lequel lesdits premier et deuxième éléments presseurs (23) et le ou lesdits troisièmes éléments presseurs (25) sont mobiles par rapport à ladite table (12).

9. L'appareil (10) de la revendication 3, dans lequel l'épaisseur de et le matériau pour ladite surface d'amortissement est choisi de manière que ledit matériau fléchisse d'au moins 1 mm avant ladite rupture de verre.

10. Un procédé pour séparer une feuille de verre (14) le long d'une ligne de rayure (28) sur une surface de ladite feuille de verre comprenant les opérations consistant :
à soulever ladite feuille le long de ladite ligne de rayure avec un élément de levier de forme allongée (18) qui applique une première force à la surface de ladite feuille de verre opposée à ladite ligne de rayure, ledit élément de levier étant aligné avec ladite ligne de rayure, pour faire fléchir ladite feuille dans la région de ladite ligne de rayure ;
à appliquer une deuxième et une troisième forces, au moyen d'un premier et d'un deuxième éléments presseurs de forme allongée (23), placés de chaque côté de ladite ligne de rayure, à la surface de ladite feuille de verre portant ladite ligne de rayure, pour exercer un effort préliminaire sur la ligne de rayure de ladite feuille de verre ; et
à amener la face supérieure de ladite feuille de verre en contact avec un troisième élément presseur de forme allongée (25) entre lesdits premier et deuxième éléments presseurs de forme allongée, ledit troisième élément exerçant un effort critique sur la ligne de rayure de ladite feuille de verre.

11. Le procédé de la revendication 10, dans lequel ledit élément de levier (18) et lesdits premier, deuxième et troisième éléments presseurs (23, 25) s'étendent sensiblement sur la longueur de ladite ligne de rayure (28).

12. Un procédé selon la revendication 10 ou 11, dans lequel lesdits deuxième et troisième éléments (23) présentent chacun une constante d'élasticité inférieure ou égale à 138 newtons par millimètre de flexion par mètre de longueur dudit élément (20 livres par pouce de flexion par pouce de longueur).

13. Un procédé selon la revendication 12, dans lequel ladite constante d'élasticité est fournie par une couche de matériau d'amortissement élastique.

14. Le procédé de la revendication 13, dans lequel ledit matériau d'amortissement comprend une mousse choisie dans le groupe formé par le caoutchouc de néoprène, le polyéthylène, le vinyle et les terpolymères d'acrylique et d'éthylène propylène.

15. Le procédé de la revendication 13 ou 14, dans lequel ledit matériau d'amortissement présente une dureté comprise entre 10 et 25 degrés sur l'échelle internationale de dureté des caoutchoucs.

16. Le procédé de l'une quelconque des revendications 10 à 15, dans lequel ledit effort critique est appliqué à l'une des extrémités de la ligne de rayure.

17. Le procédé de l'une quelconque des revendications 10 à 15, dans lequel ledit effort critique est appliqué par une paire de troisièmes éléments presseurs (25) de part et d'autre de la ligne de rayure.
